# EUROPÄISCHE PATENTSCHRIFT

(11) **EP 1 992 550 B1**
(45) Veröffentlichungstag und Bekanntmachung des Hinweises auf die Patenterteilung: **22.09.2010**
(21) Anmeldenummer: 08008886.7
(22) Anmeldetag: 14.05.2008
(51) Int. Cl.: B62D 35/00

(54) **Antriebseinrichtung für einen Spoiler**
Actuation device for a spoiler
Dispositif d'entraînement pour un spoiler

(30) Priorität: 18.05.2007 DE 102007023289
(43) Veröffentlichungstag der Anmeldung: 19.11.2008
(73) Patentinhaber: Audi AG, 85045 Ingolstadt (DE)
(72) Erfinder: Pickl, Richard, 85095 Denkendorf (DE)
(74) Vertreter: Engelhardt, Harald

(56) Entgegenhaltungen:
- EP-A1- 0 005 358
- EP-B1- 0 153 743
- WO-A1-2007/095886
- DE-A1- 10 104 752
- JP-A- 5 294 264

## Beschreibung

Die Erfindung bezieht sich auf eine Antriebseinrichtung für einen Spoiler gemäß dem Oberbegriff des Patentanspruchs 1.

Bei Spoilern von Kraftfahrzeugen, welche von einer Ruhestellung in eine angehobene Betriebsstellung bewegbar sind, kann es zu Problemen kommen, wenn das Fahrzeug mit einer dickeren Eisschicht überzogen ist. Um trotzdem ein Ausfahren des Spoilers zu ermöglichen, werden oftmals leistungsfähigere Antriebe und verstärkte Beschläge eingesetzt. Diese Vorgehensweise erhöht das Gewicht und die Kosten.

Alternativ wird in der DE 101 04 752 A1 eine Beheizung vorgeschlagen. Diese Vorgehensweise ist ebenfalls aufwändig und benötigt viel elektrische Energie, die gerade im Winterbetrieb kurz nach dem Start des Motors nur beschränkt zur Verfügung steht. Außerdem ist in Abhängigkeit von der Eisschichtdicke eine gewisse Zeit notwendig, um das Eis zu schmelzen.

Eine weitere Antriebseinrichtung ist von JP 05 294 264 bekannt.

Der vorliegenden Erfindung liegt die Aufgabe zugrunde, mit sehr einfachen baulichen Mitteln dafür Sorge zu tragen, dass auch bei einer dickeren Eisschicht der Spoiler freikommt und in seine Betriebsstellung bewegt werden kann.

Die Aufgabe wird dadurch gelöst, dass auf der Antriebswelle für den Spoiler mindestens ein Nocken befestigt ist durch den der Spoiler direkt oder indirekt um einen geringfügigen Betrag anhebbar ist. Während der Betätigung des Spoilers über den Nocken ist die Koppelung zwischen der Antriebswelle und dem Ausstellhebel für den Spoiler unterbrochen; diese Koppelung wird im weiteren Bewegungsablauf, also wenn der Nocken seinen maximalen Hub erreicht oder überschritten hat, wieder hergestellt und darüber der Spoiler ausgefahren.

Über die Antriebswelle für den Spoiler wird zunächst die Eisbrechfunktion und anschließend die Ausstellbewegung des Spoilers bewirkt. Aufgrund der Hebelverhältnisse lässt sich durch den Nocken an der Antriebswelle eine sehr hohe Kraft auf den zugeordneten Randabschnitt des Spoilers ausüben, wodurch das Eis gebrochen wird. Durch die Ausgestaltung des Nocken, insbesondere durch seinen Hub, wird eine exakte Kraft- und Wegbestimmung erreicht. Bevorzugt werden mehrere Nocken eingesetzt welche möglichst nahe der Lagerstellen für die Antriebswelle angeordnet sein sollten, um eine Durchbiegung der Antriebswelle weitestgehend zu vermeiden.

Erst wenn die Nocken ihre "Eisbrechfunktion" durchgeführt haben, wird durch dieselbe Antriebswelle im weiteren Bewegungsablauf die eigentliche Ausstellbewegung des Spoilers durchgeführt. Da bei gebrochenem Eis viel geringere Kräfte notwendig sind, um den Spoiler in seine Betriebsstellung zu bewegen, können die betroffenen Bauteile entsprechend dimensioniert werden.

Wie vorstehend ausgeführt, sind durch eine einzige Antriebswelle und nur eine Bewegungsrichtung die Funktion "Eisbrechen" und die Funktion "Spoiler ausfahren" durchführbar. Um die Funktionen getrennt und nacheinander durchführen zu können, ist eine Koppelungsmöglichkeit zwischen der Antriebswelle und dem Ausstellhebel notwendig. Natürlich ist auch eine kinematische Umkehr denkbar, nämlich dass der Nocken wahlweise in Eingriff mit der Antriebswelle bringbar ist. Dies dürfte einen größeren Bauaufwand erfordern, ist jedoch technisch ohne weiteres möglich.

Die notwendige Koppelung zwischen Antriebswelle und Ausstellhebel wird gemäß einer besonders vorteilhaften Ausgestaltung der Erfindung dadurch erreicht, dass an der Antriebswelle ein fest mit ihr verbundener Anschlag angeordnet ist, dass sich der Anschlag in der ersten Bewegungsphase, während der der Nocken auf den Spoiler einwirkt, frei dreht, und dass dann, nachdem der Nocken seinen maximalen Hub erreicht hat, der Anschlag im restlichen Bewegungsablauf auf den Aufstellhebel in dem Sinne einwirkt, dass er den Ausstellhebel dreht und darüber den Spoiler in die Betriebsstellung bewegt. Anders ausgedrückt ist an der Antriebswelle ein Anschlag vorhanden, welcher erst nach einem Freigang auf den Ausstellhebel einwirkt. Der Winkelbereich für den Freigang lässt sich in einfacher Weise festlegen und auf den Nocken abstimmen. Dabei wird der Anschlag bevorzugt dann wirksam, wenn der Nocken seinen maximalen Hub erreicht hat. Je nach den baulichen Gegebenheiten und dem gewünschten Verhalten ist es natürlich auch möglich, die Wirksamkeit des Anschlags bei einer anderen Nockenstellung sicherzustellen.

Gemäß einer bevorzugten Ausführungsform kann der Ausstellhebel lose auf der Antriebswelle gelagert sein und der Aufstellhebel eine konzentrisch zur Antriebswelle angeordnete und durch ihre Position in der ersten Bewegungsphase den Freigang bestimmende Mitnahmefläche für den Anschlag aufweisen. Der Aufstellhebel ist demnach also stets lose auf der Antriebswelle gelagert und wird nach einem Freigang über den fest mit der Antriebswelle verbundenen Anschlag mitgenommen.

Ein Ausführungsbeispiel der Erfindung ist in der Zeichnung dargestellt und wird nachfolgend näher beschrieben. Es zeigen:
- Figur 1: in perspektivischer Darstellung einen Spoiler mit einer eine Antriebswelle und einen Ausstellhebel umfassenden Antriebseinrichtung,
- Figur 2: die Einzelheit Z1 aus Figur 1 in Seitenansicht und
- Figur 3: eine weitere perspektivische Darstellung derselben Anordnung, jedoch unter einem anderen Blickwinkel.

Ein Spoiler 5 ist auf jeder seiner beiden Schmalseiten 7 über eine Verbindungslasche 9 und einen Ausstellhebel 11 von der in der Zeichnung gezeigten Ausgangslage in eine angehobene Betriebsstellung bewegbar.

Die Verbindungslasche 9 ist über gelenkige Verbindungen mit dem Spoiler 7 und einer Schiebeführung 13 verbunden. Zur Anlenkung des Aufstellhebels 11 am Spoiler 5 ist eine Schwenkachse 15 vorgesehen. Das der Schwenkachse 15 abgewandte Ende des Aufstellhebels 11 weist ein Lager 17 auf, welches den Endbereich einer Antriebswelle 19 umschließt.

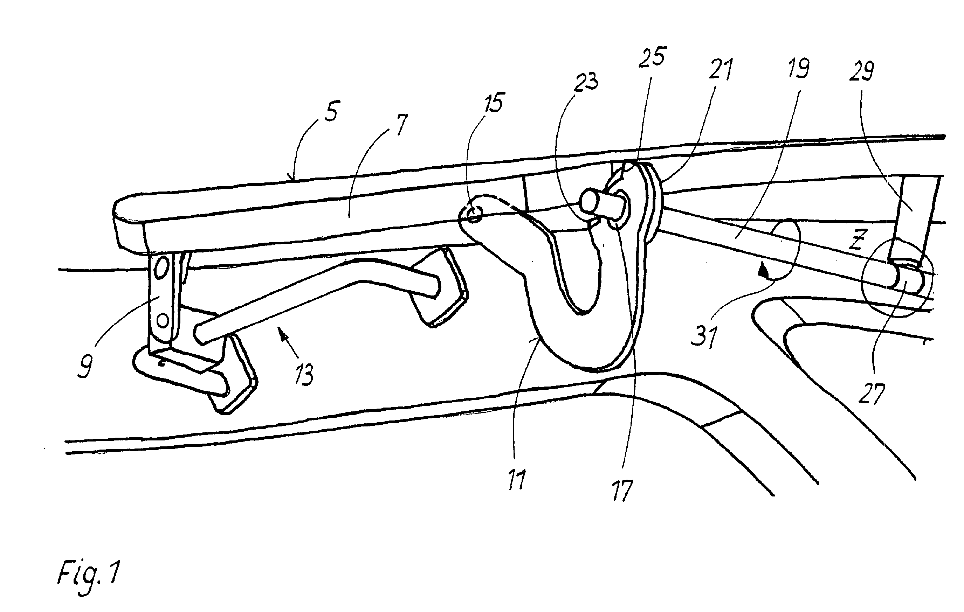

Wie Figur 1 zeigt, liegt im Bereich des Lagers 17 an dem Ausstellhebel eine Scheibe 21 an, die fest mit der Antriebswelle 19 verbunden ist. Die Scheibe 21 weist einen Anschlag 23 auf, welcher nach Drehung der Antriebswelle und damit der Scheibe 21 um etwa 90° auf eine an dem Aufstellhebel 11 ausgebildete Mitnahmefläche 25 einwirkt.

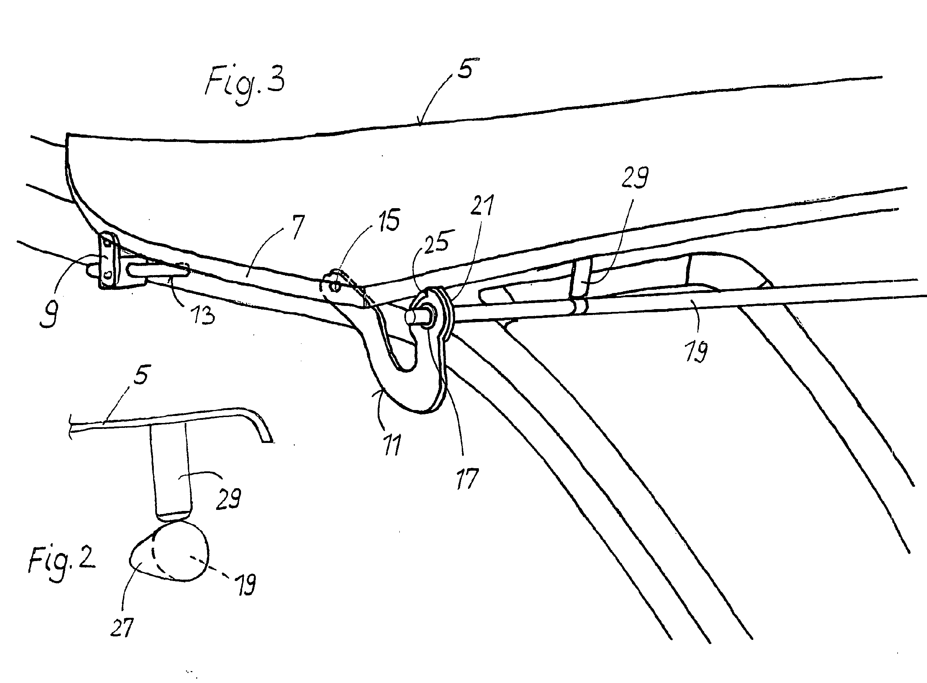

An der Antriebswelle 19 ist außerdem starr ein Nocken 27 befestigt, dessen größte Erhebung etwa in Richtung des Anschlages 23 weist und deshalb in der Darstellung gemäß Figur 1 nicht erkennbar ist. Bezüglich dieses Details wird auf die Darstellung in Figur 2 verwiesen. An dem Nocken 25 liegt ein am Spoiler 5 befestigtes Distanzstück 29 an. Bei Drehung der Antriebswelle 19 und damit des Nockens 27 wird über das Distanzstück 29 der Spoiler 5 um einen geringfügigen Betrag nach oben bewegt.

Alle Darstellungen zeigen den Spoiler 5 in seiner Ausgangslage. Um den Spoiler 5 in seine Betriebsstellung zu bewegen, wird die Antriebswelle 19 durch einen nicht dargestellten Antrieb in Richtung des Pfeiles 31 gedreht. Dabei drückt der mit der Antriebswelle 19 verbundene Nocken 27 über das Distanzstück 29 den Spoiler 5 mit großer Kraft nach oben. Bei der in dem Ausführungsbeispiel gewählten Anordnung wird der maximale Hub nach etwa 90° Drehung erreicht.

Die Antriebswelle 19 dreht auch den Anschlag 23 an der Scheibe 21. Dies hat zunächst keine Auswirkung auf die Bewegung des Ausstellhebels 11, da sich der Anschlag 23 zunächst frei um den Ausstellhebel bewegen kann. Erst nach einer Drehung der Antriebswelle 19 um etwa 90° wirkt der Anschlag 23 auf eine an dem Aufstellhebel 11 ausgebildete Mitnahmefläche 25, wodurch die Aufstellbewegung des Aufstellhebels 11 eingeleitet wird.

Zusammenfassend ist der Bewegungsablauf also so, dass zunächst über den Nocken eine kurzhubige Bewegung mit hoher Kraft auf den Spoiler ausgeübt wird, wodurch eine den Spoiler 5 überziehende Eisschicht gebrochen werden kann. Während dieser Bewegung sorgt ein Freilauf mit Anschlag 23 und Mitnahmefläche 25 dafür, dass der Spoiler 5 zwar über die Antriebswelle 19, jedoch verzögert über den Ausstellhebel 11 in die Betriebsstellung gebracht wird.

## Patentansprüche

1. Antriebseinrichtung für einen Spoiler, mit einer Antriebswelle und ein im Endbereich der Antriebswelle angeordneten Ausstellhebel, wobei auf der Antriebswelle (19) mindestens ein Nocken (27) befestigt ist durch den der Spoiler (5) direkt oder indirekt um einen geringfügigen Betrag anhebbar ist, **dadurch gekennzeichnet, dass** während der Betätigung des Spoilers (5) über den Nocken (27) die Koppelung zwischen der Antriebswelle (19) und dem Ausstellhebel (11) unterbrochen ist, und dass im weiteren Bewegungsablauf die Koppelung wieder hergestellt und darüber der Spoiler (5) in seine Betriebsstellung bewegt wird, wenn der Nocken (27) seinen maximalen Hub erreicht oder überschritten hat.

2. Einrichtung nach Anspruch 1, **dadurch gekennzeichnet, dass** an der Antriebswelle (19) ein fest mit ihr verbundener Anschlag (23) angeordnet ist, dass sich der Anschlag (23) in der ersten Bewegungsphase, während der der Nocken (27) auf den Spoiler (5) einwirkt, frei dreht, und dass dann, nachdem der Nocken (27) seinen maximalen Hub erreicht hat, der Anschlag (23) im restlichen Bewegungsablauf auf den Ausstellhebel (11) in dem Sinne einwirkt, dass er den Ausstellhebel (11) dreht und darüber den Spoiler (5) in die Betriebsstellung bewegt.

3. Einrichtung nach Anspruch 2, **dadurch gekennzeichnet, dass** der Ausstellhebel (11) lose auf der Antriebswelle (19) gelagert ist, und dass der Ausstellhebel (11) eine konzentrisch zur Antriebswelle (19) angeordnete und durch ihre Position in der ersten Bewegungsphase den Freigang bestimmende Mitnahmefläche (25) für den Anschlag (23) aufweist.

## Claims

1. Drive mechanism for a spoiler, having a drive shaft and a setting-out lever arranged in the end region of the drive shaft, wherein at least one cam (27), by means of which the spoiler (5) can be lifted directly or indirectly by a small amount, is secured on the drive shaft (19), **characterized in that** during the actuation of the spoiler (5) via the cam (27), the coupling between the drive shaft (19) and the setting-out lever (11) is interrupted, and **in that** the coupling is restored during the continued sequence of movement and the spoiler (5) is moved via the coupling into its operative position when the cam (27) has reached or exceeded its maximum stroke.

2. Mechanism according to Claim 1, **characterized in that** an abutment (23) is arranged on and fixedly connected to the drive shaft (19), **in that** the abutment (23) rotates freely in the first phase of movement, during which the cam (27) acts on the spoiler (5), and **in that** then, after the cam (27) has reached its maximum stroke, the abutment (23) acts on the setting-out lever (11) during the rest of the sequence of movement in such a way that it rotates the setting-out lever (11) and via the latter moves the spoiler (5) into the operative position.

3. Mechanism according to Claim 2, **characterized in that** the setting-out lever (11) is mounted loosely on the drive shaft (19) and **in that** the setting-out lever (11) has for the abutment (23) a driving face (25) which is arranged concentrically with the drive shaft (19) and which determines the clearance by its position in the first phase of movement.

## Revendications

1. Dispositif d'entraînement pour un spoiler, comprenant un arbre d'entraînement et un levier de sortie disposé dans la région d'extrémité de l'arbre d'entraînement, au moins une came (27) étant fixée sur l'arbre d'entraînement (19), et permettant de soulever le spoiler (5) directement ou indirectement d'une légère distance, **caractérisé en ce que** pendant l'actionnement du spoiler (5) par le biais de la came (27), l'accouplement entre l'arbre d'entraînement (19) et le levier de sortie (11) est rompu, et **en ce qu'**au cours du mouvement ultérieur, l'accouplement est rétabli et le spoiler (5) est en outre déplacé dans sa position fonctionnelle, lorsque la came (27) a atteint ou dépassé sa course maximale.

2. Dispositif selon la revendication 1, **caractérisé en ce qu'**une butée (23) est disposée sur l'arbre d'entraînement (19) de manière connectée fixement à celui-ci, **en ce que** la butée (23) tourne librement dans la première phase de mouvement durant laquelle la came (27) agit sur le spoiler (5), et **en ce qu'**ensuite, une fois que la came (27) a atteint sa course maximale, la butée (23) agit dans le reste du déroulement du mouvement sur le levier de sortie (11) de telle sorte qu'elle tourne le levier de sortie (11) et déplace en outre le spoiler (5) dans la position fonctionnelle.

3. Dispositif selon la revendication 2, **caractérisé en ce que** le levier de sortie (11) est monté librement sur l'arbre d'entraînement (19), et **en ce que** le levier de sortie (11) présente une surface d'entraînement (25) pour la butée (23), qui est disposée concentriquement à l'arbre d'entraînement (19) et qui définit la course libre par sa position dans la première phase de mouvement.
